(19) Europäisches Patentamt
European Patent Office
Office européen des brevets

(11) Publication number: **0 434 276 B1**

(12) EUROPEAN PATENT SPECIFICATION

(45) Date of publication of patent specification: **15.02.95**
(51) Int. Cl.6: **B29C 49/66**, B29C 49/64, B29C 49/14, B29C 49/08

(21) Application number: **90313443.5**

(22) Date of filing: **11.12.90**

(54) **Heatsetting of thermoplastic tubular articles.**

(30) Priority: **15.12.89 GB 8928350**

(43) Date of publication of application:
**26.06.91 Bulletin 91/26**

(45) Publication of the grant of the patent:
**15.02.95 Bulletin 95/07**

(84) Designated Contracting States:
**DE FR GB NL**

(56) References cited:
EP-A- 0 052 490         EP-A- 0 195 591
WO-A-85/01011           FR-A- 2 389 478
GB-A- 2 195 287         US-A- 3 505 442

(73) Proprietor: **CarnaudMetalbox plc**
**Woodside**
**Perry Wood Walk**
**Worcester WR5 1EO (GB)**

(72) Inventor: **Arnell, Steve Robert**
**31 Larchmore Close**
**Greenmeadow,**
**Swindon,**
**Wiltshire SN2 3OG (GB)**
Inventor: **Brooks, David William**
**3 Whitehorse Crescent**
**Grove,**
**Wantage,**
**Oxfordshire OX12 0PY (GB)**
Inventor: **Wheatley, Matthew Gawain**
**13 Colne Close**
**Grove,**
**Wantage,**
**Oxfordshire (GB)**

(74) Representative: **Driver, Virginia Rozanne et al**
**Page White & Farrer**
**54 Doughty Street**
**London WC1N 2LS (GB)**

## Description

This invention relates to the manufacture of thermoplastic tubular articles, according to the preamble of claim 1, particularly but not exclusively to the manufacture of tubular articles of saturated linear polyester material such as polyethylene terepthalate (PET), intended to form the bodies of processable food and beverage containers.

The invention also relates to an apparatus according to the preamble of claim 7.

It is known in the manufacture of such articles that a high degree of orientation of the container body is desirable for improving its mechanical properties. This can be induced by mechanical deformation such as drawing, stretching or stretch-blow-moulding of the thermoplastic material.

A method and apparatus for forming biaxially oriented tubular articles by stretch-blow-moulding are described in our British Publication No. 2089276A. In that method continuous hollow tube is drawn and blown to orient it, a can-sized length at a time and the oriented tube is chopped off. In contrast, the present invention is concerned with the manufacture of biaxially oriented articles from discrete lengths of plastic tube.

It is known that an oriented article will shrink if heated to a temperature above that at which the orientation took place. Containers which are to be used for products which are filled when hot or thermally sterilised or pasteurised after filling must therefore be heat stabilised to an elevated temperature. This can be done by heating the oriented article to a temperature above the elevated temperature whilst restraining it from deformation: this process is known as "heat setting".

Methods of heat setting suitable for open ended tubular oriented articles are known, for example as described in GB Patent publications 2172540 and 2179585. These publications are however concerned with the heat setting of an article after removal from the mould in which it has been oriented: thus in them it is necessary to transfer the article from the stretch-blow-moulding machine to a heat setting machine. Another difficulty is that the heat setting processes described there rely on positioning the oriented article on a mandrel and are therefore suited only to straight walled containers. They are not commercially applicable to shaped containers.

European Publication No. 0081451 describes a process for producing heat set bottles (of length about 1/2m) where the orientation and heat treatment steps are carried out without the need for transferring the bottle to a separate station. This method is not applicable to a tubular article with two open ends. Further the method is carried out with the bottle held vertically and is not suitable for long articles.

A further method and apparatus for stretch-blow moulding of tubular articles is disclosed in applicants' European Publication No 052490, upon which the preambles of the independent claims 1 and 7 are based, where a tubular body is gripped within clamping means stretched and internally pressurised to create a radially and longitudinally expanded tube which may be heated to effect heat-setting.

According to one aspect of the present invention there is provided a method of manufacturing from a hollow elongate preform of a crystallisable polymeric material an elongate thermoplastic tubular article which is open at both ends and which is dimensionally stable up to an elevated temperature, the method comprising:

a) gripping end portions of the preform to define between the end portions a central portion from which the article is to be formed;

b) introducing a pressurised gas into the preform to cause the central portion to expand radially against a mould heated to a temperature sufficient to cause heat setting, the central portion simultaneously undergoing elongation thereby to impart biaxial orientation to the finished article;

c) maintaining the central portion in contact with the mould for a predetermined heat setting time with said pressurised gas held therein; characterised by then:

d) rapidly cooling the central portion by simultaneously spraying cooling water into it and exhausting the said pressurised gas through one end of the preform, the exhaustion of gas not only creating turbulance by which the cooling water spray is caused to wet substantially the entire inner surface of the central portion but also purging the preform of a substantial quantity of the cooling water.

The use of water as cooling liquid has many advantages, amongst which are that it is cheap and conveniently available and its latent heat of vapourisation can be used in the cooling process. It has hitherto not been considered appropriate to use water on its own as a cooling medium for heatsetting, but instead cryogenic substances such as low temperature gas mists have been proposed. However, in the present invention, by virtue of the turbulence and purging action created by the exhaustion of gas at high pressure heat may be quickly and efficiently removed from the polymer material of the central portion and carried out of the preform.

It has been found that it is not essential for the purging of the cooling water by the gas to empty the cooling water from the article completely. Any water which does remain can be removed later after the article has been removed from the mould.

The method defined above enables tubular articles to be manufactured even in excess of 2 metres, and is preferably carried out with such articles disposed horizontally. Further the method is suitable both for straight walled and shaped articles; for example, it may be used to produce shaped containers with adequate stability for receiving product at 95°C.

In a preferred embodiment, the method includes, prior to step a), heating said preform to a temperature exceeding the glass transition temperature of the polymer material while providing a temperature gradient without discontinuities along the central portion. As will become apparent, the preferred embodiment is concerned with the stretch-blow-moulding of PET. For this material in its amorphous state the glass transition temperature ($T_q$) is typically 75°C, the temperature of its maximum rate of crystallisation after biaxial orientation being about 160°C. Preferably, the temperature of the preform prior to stretch-blow-moulding is between the ends of its central portion being about 5°C.

The inventors have discovered that by providing a controlled temperature differential between the ends of the central portion and by controlling the air pressure (in dependence on the polymer), long (>2m) articles of a very uniform wall thickness and with consistent material qualities can be produced repeatably. This is discussed in more detail in our copending application No. 90313444.3 (Published No 0434277) filed today, the contents of which are herein incorporated by reference. The present invention enables such long articles to be formed and heat set quickly and in an energy efficient manner.

The thermoplastics materials which are preferred for use in the method of the present invention are crystallisable polymers with well-defined natural stretch ratios. The preferred material is a polyester homopolymer, which consists of polymer units derived from ethylene terephthalate, produced from terephthalic acid plus ethylene glycol (PET). Other suitable materials include polyester copolymers which consist of polymer units based on ethylene terephthalate, produced from terephthalic acid, isophthalic acid, plus ethylene glycol, diethylene glycol, cyclohexane dimethanol but could also include other polyesters or copolyesters including poly (ethylene isophthalate) PEI, poly (ethylene napthalene-dicarboxylate) PEN., or polyester or copolyester blends.

The method is also suitable for multilayer preforms, for example coextruded structures of PET with a gas barrier material such as an ethylene vinyl alcohol copolymer or a polyamide copolymer.

According to another aspect of the present invention, there is provided apparatus for manufacturing from a hollow preform of a crystallisable polymeric material an elongate thermoplastic tubular article which is open at both ends and which is dimensionally stable up to an elevated temperature, the apparatus comprising:

a) first and second spaced gripping means for gripping respective end portions of the preform so as to define a central portion of the preform from which the article is to be formed;

b) a heated elongate mould to surround the central portion when the preform is held by the gripping means;

c) means including a conduit in the first gripping means for introducing pressurised gas into the preform to cause it to expand radially against the mould, the preform simultaneously undergoing elongation thereby to impart biaxial orientation to the finished article, and to maintain the article in contact with the mould for a predetermined heat setting time;

characterised by:

d) spray means including water supply conduits in the gripping means for spraying cooling water into the article after the said heat setting time; and

e) exhaust means including an exhaust conduit in the second gripping means openable simultaneously with the spray means for exhausting the pressurised gas through one end of the preform, such exhaustion of gas not only creating turbulence by which the cooling water spray is caused to wet substantially the entire inner surface of the central portion but also purging the preform of a substantial quantity of the water.

Preferably the apparatus also includes a heating device for preheating said preform to a temperature above the glass transition temperature while providing a temperature gradient without discontinuities between the ends of the preform, one end being at a temperature at least 3° lower than that of the other end.

Preferably the support means comprises first and second grippers for gripping respective ends of the preform, the second gripper being movable relative to the first to stretch the preform.

For a better understanding of the present invention and to show how the same may be carried into effect reference will now be made by way of example to the accompanying drawings, in which:-

Figure 1 is a block diagram of apparatus for manufacturing thermoplastic articles;

Figure 2 is a diagram showing air and water supplies to the apparatus;

Figure 3 is a cross section through a part of the apparatus showing air and water supply ducts;

Figures 4(a) to 4(g) are diagrams illustrating steps in the manufacturing process;

Figures 5(a) and 5(b) are graphs showing exemplary temperature profiles applied to the preforms;

Figure 6 is a graph showing the height reduction of heat set containers vs. heat set temperature;

Figure 7 is a graph of the diameter reduction of heat set containers vs. heat set temperature;

Figure 8 is a graph of the volume shrinkage of heat set articles vs. heat set temperature;

Figure 9 is a timing chart for a preferred embodiment of the method of the present invention; and

Figure 10 is a graph comparing the crystallinity of heat set and non-heat set articles.

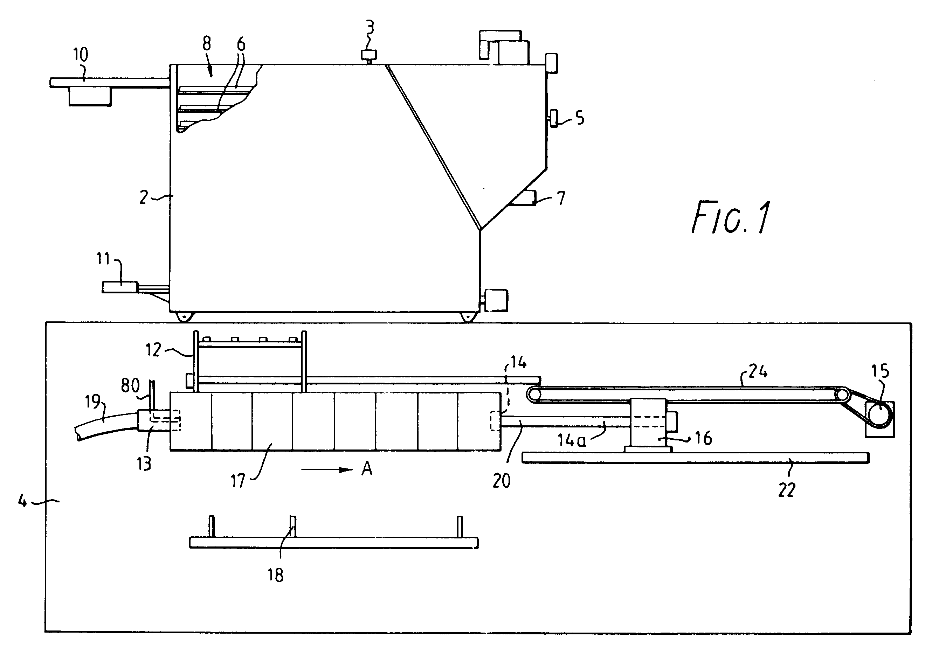

The apparatus comprises a hot air oven 2 mounted above a stretch/blow station 4. The oven 2 has associated therewith a tube supply device 10 which sequentially supplies preforms in the form of elongate tubes to preform trays 6 of a carrier 8. The preforms are hollow extruded tubes made of PET or another suitable polymer and having a length of about 1m. The carrier 8 has a plurality of vertically spaced preform trays. The carrier 8 moves stepwise to carry preforms vertically downwards through the hot air oven 2 wherein they are heated. An air heater 7 heats the air for the oven while thermocouples 3,5 monitor the temperature. A tube transfer device 12 transfers the tube from the oven to the stretch/blow station 4 where it is supported by a "static" gripper 13 at one end of the mould 17 and a "stretch" gripper 14 carried from the axially opposite end of the mould 17. The corresponding ends of the preform are termed the "static" end and the "stretch" end. The static gripper 13 is so-called because apart from moving a short distance back and forth to collect and grip an incoming tube it remains substantially in the same position. The static gripper 13 has a hollow gripper head permitting the supply of air and water from an air supply hose 19 and water supply conduit 80. The heads of the grippers 13,14 are not visible in Figure 1 as they are within the mould. The mould 17 comprises two halves, one of which can be seen in Figure 1, which are locked together once the preform is in place.

The stretch gripper 14 can be moved axially to the right in Figure 1 under the control of a drive unit 16 movable on a track 22 driven by a nylon belt 24 which in turn is driven by a servomotor 15. The servomotor 15 is controlled by a dedicated motion controller (not shown) to move a stretch rod 20 attached to the stretch gripper 14 to a preset position at a preset velocity once blowing has commenced. The dedicated motion controller is preprogrammed with operational conditions depending on the requirements of the stretch/blow process and the specification of the product. Finally, a transfer device 18 is operable to remove the blown container from the mould 17.

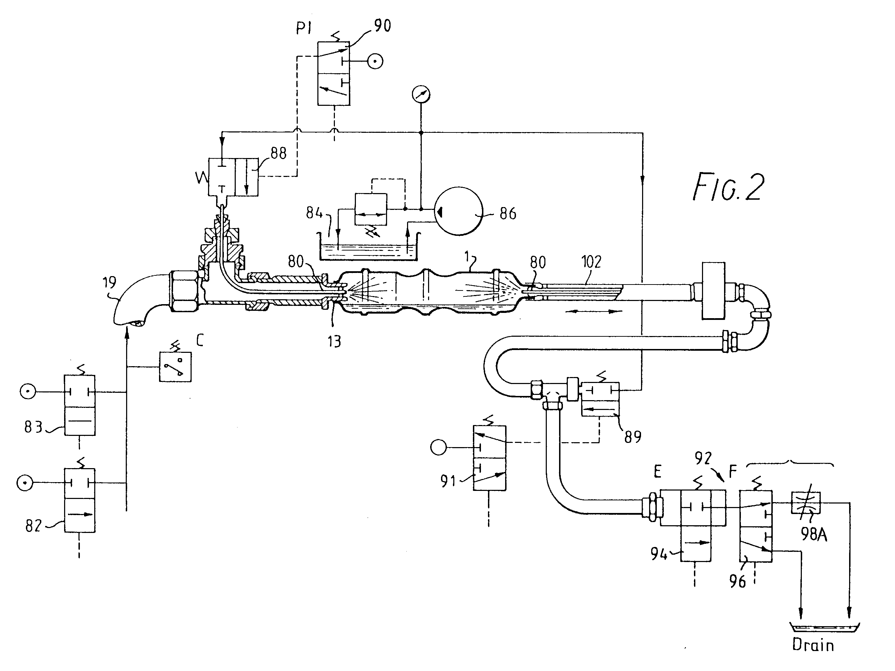

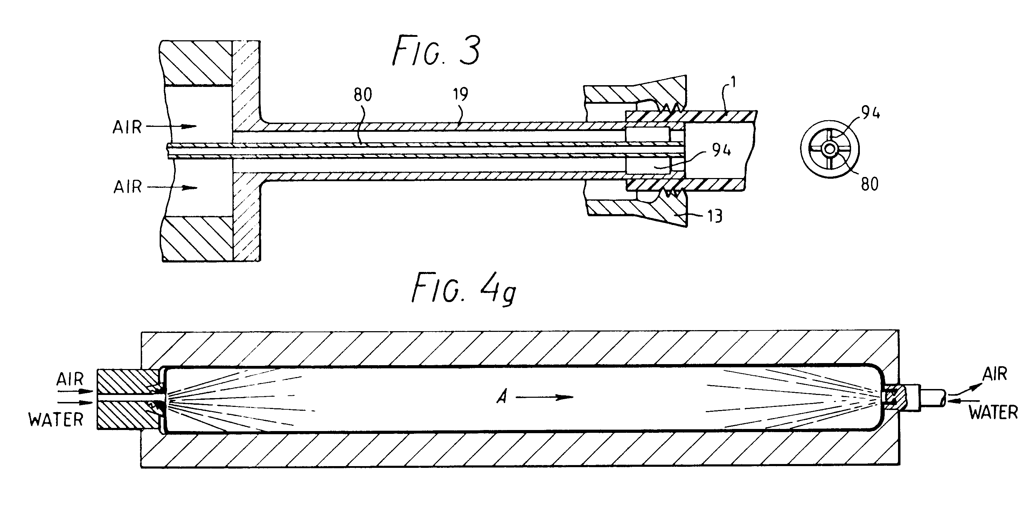

Figure 2 shows the air and water supplies to the stretch/blow station 4. Respective valves 82,83 supply selectively preblow and mainblow air to the static gripper 13 via the air supply hose 19. Water is supplied from a reservoir 84 by means of a pump 86 to respective spray guns 88,89 arranged to supply the static and stretch gripper heads. The spray guns are controlled by respective pilot valves 90,91. The spray guns 88,89 introduce water into the article 1 via respective water supply conduits 80. A valve arrangement 92 controls release of the air/water flushing mixture from the article. The valve arrangement 92 comprises an exhaust valve 94, a flush valve 96 and a flow restrictor 98A. Figure 3 shows the air and water supplies to the static gripper 13 in more detail. The water supply conduit 80 comprises small bore copper piping held centrally of the air supply conduit 19 by fins 94. The arrangement at the stretch gripper 14 is similar. A suitable nozzle is used to spray the water into the article.

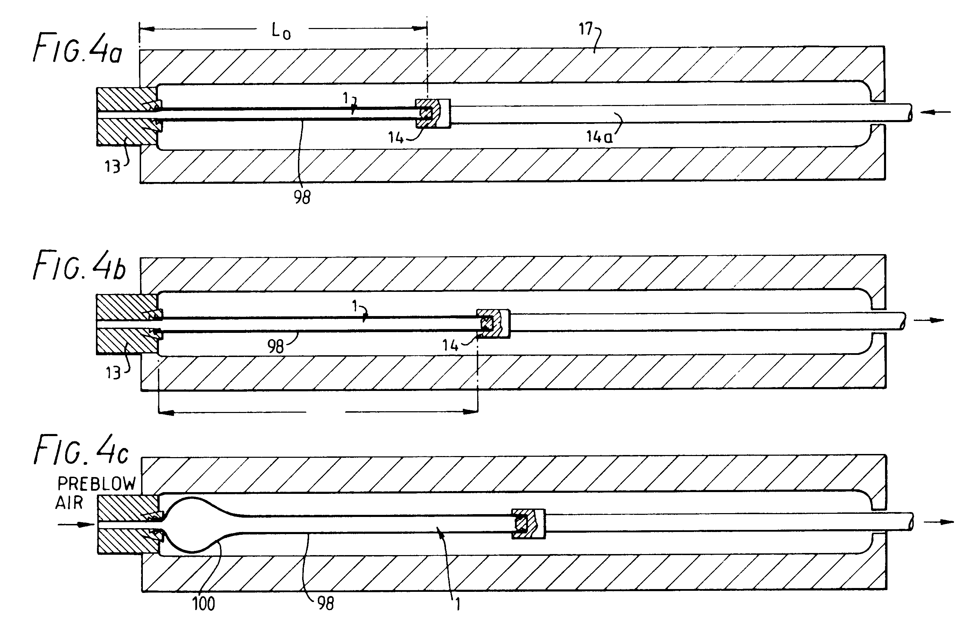

Reference will now be made to Figures 4a to 4g to describe a method of manufacturing thermoplastics articles which are biaxially oriented and heat set. Although the method will be described in relation to a single preform, it will be apparent that the apparatus is capable of operating with a continuous supply of preforms. That is, the tube supply device 10 sequentially supplies preforms to respective preform trays 6 of the carrier 8. These preform trays 6 are indexed through the oven 2, in time to ensure that a preform exiting from the oven has the correct temperature profile. As an example, the dwell time of a preform in the oven 2 might be about four minutes. The dwell time is controlled by the indexing speed of the carrier 8. The preform trays 6 support the preforms over their entire length. Indexing of the carrier is controlled by a machine controller (not shown) in response to the mechanical and pneumatic movement in the stretch/blow station, as discussed hereinbelow.

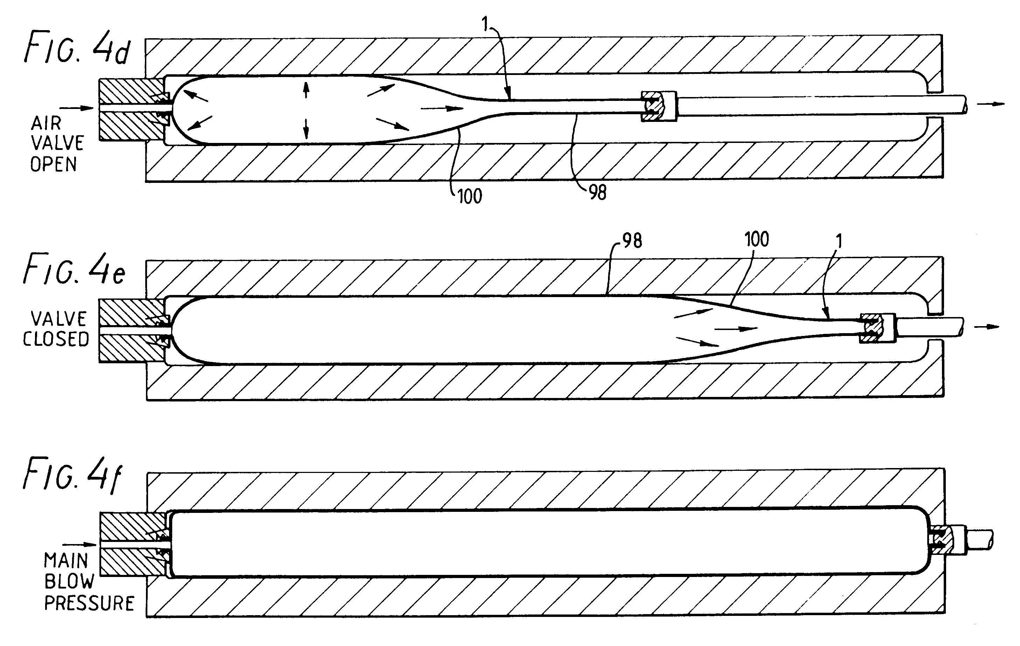

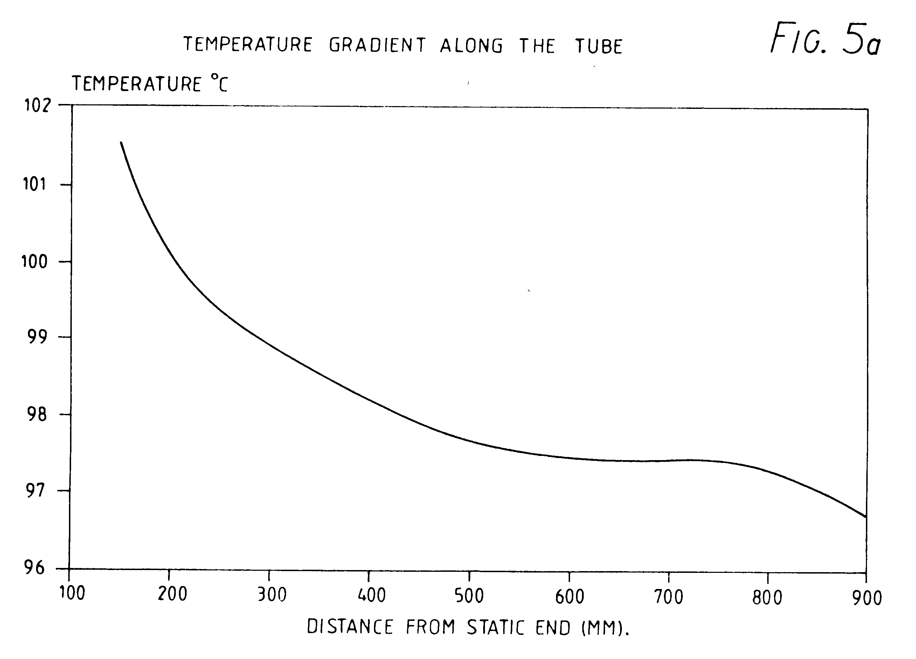

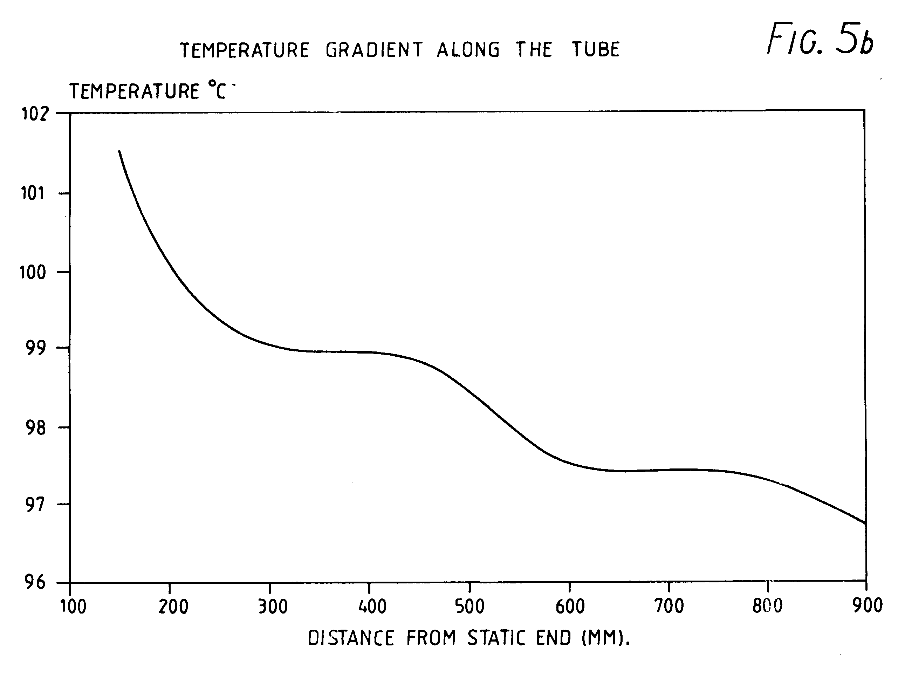

A preform 1 in the form of a discrete length of tube of a suitable plastics material, for example polyethylene terepthalate (PET) and having a length of about a metre is heated in the hot air oven in such a manner as to differentially heat it along its length to create a temperature profile therealong, for example as illustrated in Figure 5a or 5b. The preform 1 is transferred from the oven 2 to the stretch/blow station 4 where it is retained by being secured by the grippers 13, 14 at respective ends of the preform (Figure 4a). The part of the preform lying between the grippers is denoted 98 throughout Figure 4. The mould halves of the mould 17 are heated to a temperature of about 180°C and close around the preform 1 and are locked in position. Heating can be accomplished by electrical resistance heating, heated oil, or a heated jacket or any other suitable method. The gripper head 14 is moved by a short distance (to the right in Figures 1 and 4) and applies a pretensioning force of 200N, for example, to the preform (Figure 4b). This prevents the preform from sagging and prepares it for the ensuing stretch/blow process.

The end of the preform secured by the gripper head 14 is sealed by a closure within the gripper head 14. Pressurised air is introduced into the other end of the preform via the hose 19 (Figure 4c). Introduction of the pressurised air into the preform causes the static, higher temperature end of the central part 98 of the preform to begin to expand radially and simultaneously to undergo axial elongation, as manifest by an expansion front 100 (Figs. 4c to 4e). A work hardened front of expanded material develops in the polymer on this expansion front and moves with it. The axial elongation characteristics of the preform depend on the temperature profile achieved in the oven 4, and on the air pressure, and will be described in more detail hereinafter. The axial and hoop stretch induced by the pressurised air serves to orient the PET. To aid the axial elongation the gripper head 14 is moved very quickly to the right (Figure 4d) by the stretch rod mechanism 15, i.e. at a velocity at least in excess of $1 ms^{-1}$, and generally between 2 and 4 $ms^{-1}$. The stretch rod mechanism can be activated with introduction of the preblow air, or a short time thereafter to allow for initiation of the work hardened front. The delay can lie between 0.01 and 0.15 sec. The actual stretch rate depends on the process conditions, the material of the preform and the respective sizes of the preform and finished article.

The relationship between the stretch rate, the stretch ratio and the preblow period is given by the following equation:

$$\lambda_1 = 1 + \frac{\Delta}{L_o} t \qquad ----(1)$$

$\lambda_1$ is the desired axial stretch ratio in the finished article.

$\Delta = \frac{d\lambda}{dt}$ is the stretch rate.

t = preblow period

$L_o$ is the initial length of the preform.

(1) An example using typical values for these parameters is given below:

t = 0.3 $\lambda_1$ = 2.2 $\Delta$ = 4 $ms^{-1}$ $L_o$ = 1m

The expansion front and work hardened front move progressively along the preform until they reach the lower temperature, stretch end of the central part 98.

The pressurised air is turned off just before stretching is completed and, after a preset delay, mainblow air at a higher pressure is introduced (Figure 4f). The high pressure air used to blow a component is thus achieved in two stages, identified as "preblow" which lies in the range from 60 psi to 135 psi (4 to 9 bar) and "mainblow" which lies in the range from 150 psi to 200 psi (10 to 14 bar) for straight walled articles and up to 600 psi (40 bar) for shaped articles. Close control of the preblow pressure, preferably to within 1 psi, is required to achieve a good blown component. The mainblow air achieves accurate conformity of the article with the mould.

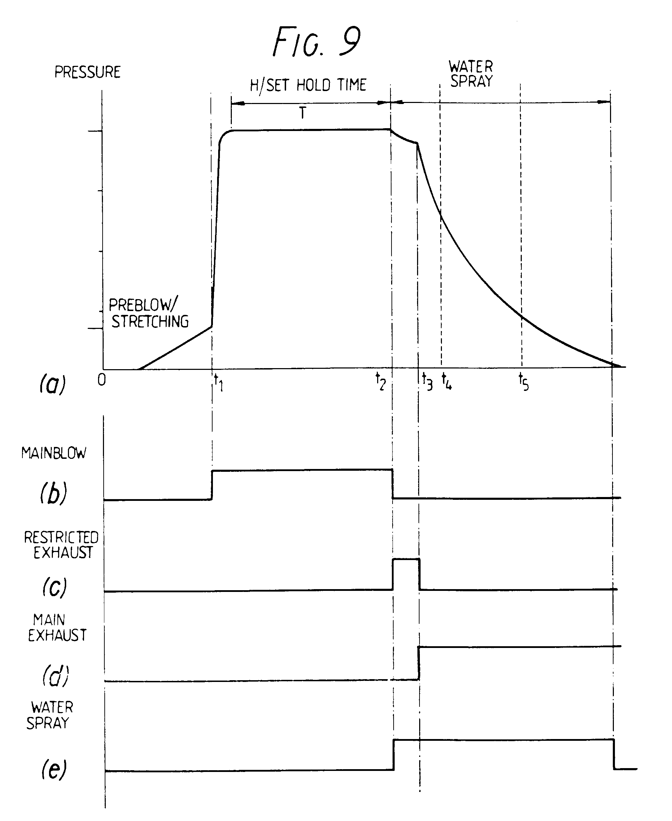

Referring to Figures 9a and 9b, the mainblow air holds the article against the mould for a predetermined heat setting period, T, for example between 3 and 5 seconds. The closure in the stretch gripper 14 is removed and water under pressure is introduced into the blown article via the water supply conduits 80 (Figure 4g). The exhaust valve 94 is opened (Figure 9d) to cause the water to be flushed along and out of the tube, via a conduit 102, with the pressurised air which is present in the article as a result of the mainblow stage. Initially, the flush valve causes the exhaust to be executed via the flow restrictor 98A. The direction of flushing is indicated by arrow A in Figure 4g. As soon as the quenching operation has chilled the blown article sufficiently to impart rigidity, after about 1 to 3 seconds, the flush valve is switched to full exhaust, i.e. no longer via the flow restrictor. When the air pressure has reduced sufficiently, the hot mould is opened. The blown article is still prone to shrinkage whilst exposed to the radiant heat from the mould, and so flushing with the water/air mixture should continue until the mould is fully opened (Figure 9e). After flushing, the blown component is transferred from the stretch/blow machine. If it contains a residue of water, a subsequent draining and drying process is necessary. Figure 9a is a graph of the pressure in the article against time when the switching sequences for the main blow air, water spray, restricted exhaust and full exhaust shown in Figures 9b to 9d are adopted.

In Figure 9a, the section o to $t_1$ is the preblow/stretching stage where the article is expanded radially and axially. At time $t_1$, the high pressure mainblow air causes a marked increase in pressure which is maintained to time $t_2$ to hold the article against the mould for the heat set time T. At time $t_2$, the water spray is commenced and the exhaust valve is opened. The pressure reduces slowly but in a manner such as to create turbulent movement of the water within the article. Substantially the entire internal surface area of the article between the grippers 13,14 is therefore wetted by the water and quickly loses heat to the water. At time $t_3$, the main exhaust commences and the pressure drops more quickly while turbulent cooling by the cooling water continues. The article becomes wholly rigid at a time about time $t_4$, and the mould is opened around time $t_5$.

The water is introduced at a rate around 150cc per second through a nozzle of approximately 2.5mm in diameter. The precise flow rate can be tailored to suit requirements but should be sufficient to wet the inner surface of the article assisted by turbulence created by the departing gas.

The heat energy which has been imparted to the tube from the oven 2 together with that generated during the stretching work undergone by the material contributes to raising the temperature of the tube to that required to achieve adequate thermal stability in the finished product. Also, of course, time is saved by avoiding the need to reheat at a subsequent stage in the process. Further, the blown component is already gripped and located within a mould, thus obviating the potentially difficult accurate handling of a large blown component into a subsequent machine.

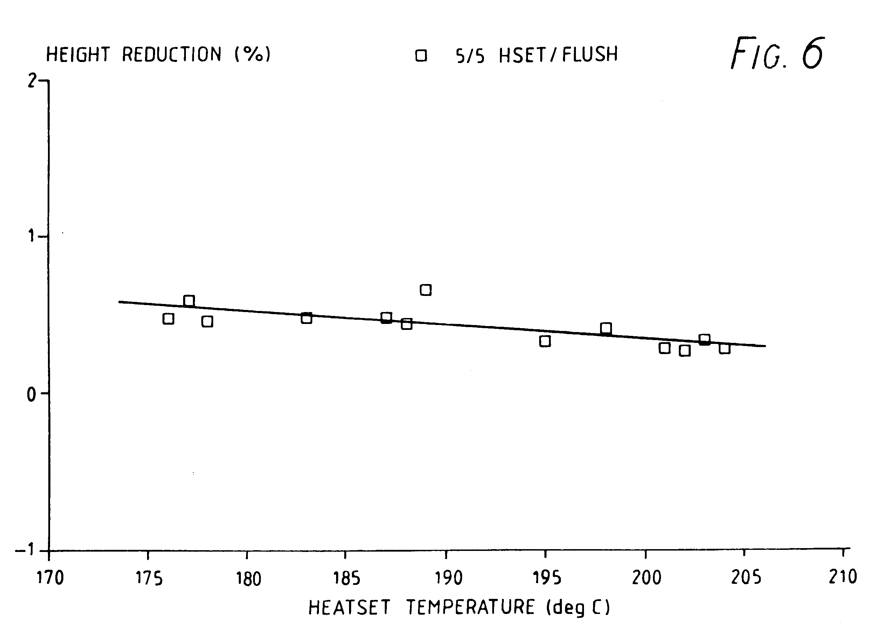

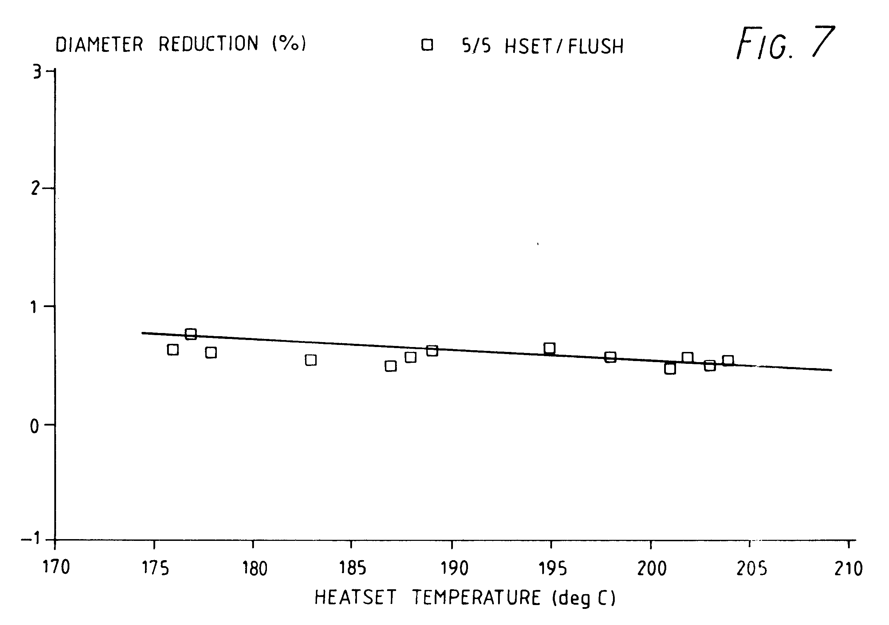

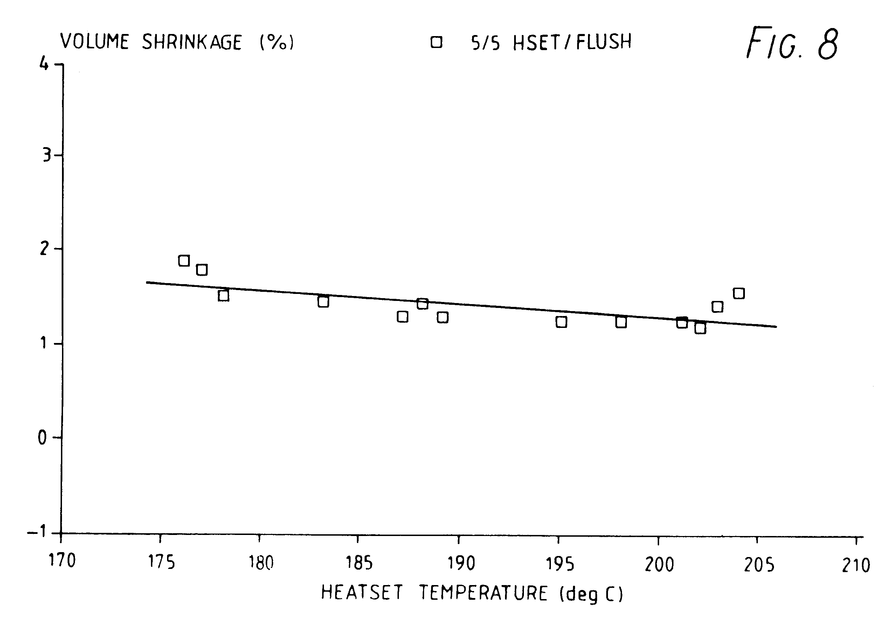

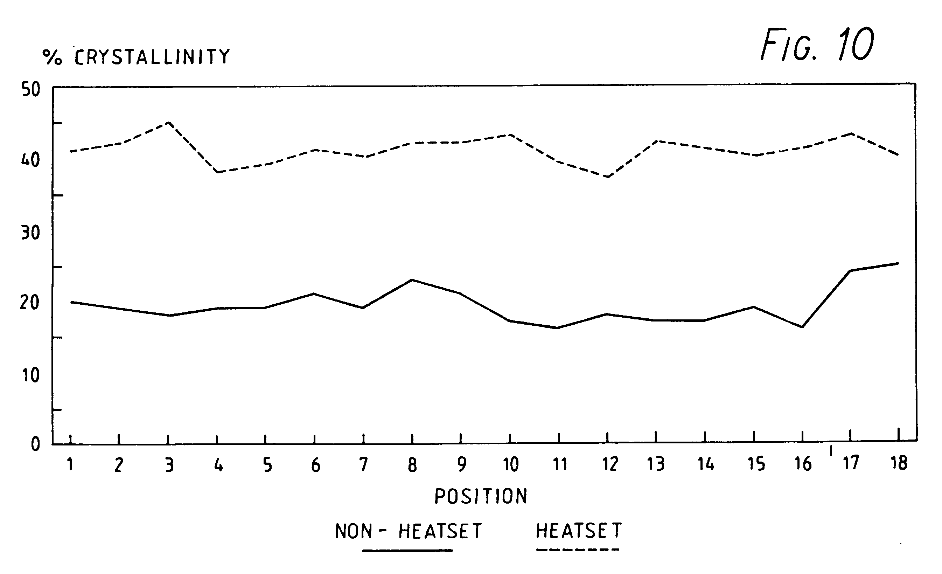

Examples of the characteristics of heat set products produced by the described process are shown in Figures 6 to 8 and 10. From these Figures, the consistent qualities of articles produced by the above described method can be seen.

## Claims

1. A method of manufacturing from a hollow elongate preform (1) of a crystallisable polymeric material an elongate thermoplastic tubular article which is open at both ends and which is dimensionally stable up to an elevated temperature, the method comprising:

a) gripping end portions of the preform to define between the end portions a central portion from which the article is to be formed;

b) introducing a pressurised gas into the preform to cause the central portion to expand radially against a mould (17) heated to a temperature sufficient to cause heat setting, the central portion simultaneously undergoing elongation thereby to impart biaxial orientation to the finished article;

c) maintaining the central portion in contact with the mould for a predetermined heat setting time with said pressurized gas held therein; characterised by then,

d) rapidly cooling the central portion by simultaneously spraying cooling water into it and exhausting the said pressurised gas through one end of the preform, the exhaustion of gas not only creating turbulance by which the cooling water spray is caused to wet substantially the entire inner surface of the central portion but also purging the preform of a substantial quantity of the cooling water.

2. A method as claimed in claim 1 or 2 for a preform of PET, wherein the mould (17) is heated to a temperature in the range 120°C to 240°C for heat setting.

3. A method as claimed in claim 1 or claim 2, wherein a first part of the exhaustion of gas is carried out through a flow restrictor (98A).

4. A method as claimed in any preceding claim for a preform of PET, wherein the gas pressure at the beginning of step (d) exceeds 10 bars.

5. A method as claimed in claim 4, wherein the gas pressure at the beginning of step (d) is within the range 10 to 14 bars.

6. A method as claimed in any preceding claim comprising, prior to step (a), heating said preform to a temperature exceeding the glass transition temperature of the polymer material while providing a temperature gradient without discontinuities along the central portion.

7. Apparatus for manufacturing from a hollow preform of a crystallisable polymeric material an elongate thermoplastic tubular article which is open at both ends and which is dimensionally stable up to an elevated temperature, the apparatus comprising:

a) first and second spaced gripping means (13, 14) for gripping respective end portions of the preform so as to define a central portion (98) of the preform from which the article is to be formed;

b) a heated elongate mould (17) to surround the central portion when the preform is held by the gripping means;

c) means including a conduit in the first gripping means (82, 83, 19, 13) for introducing pressurised gas into the preform to cause it to expand radially against the mould, the preform simultaneously undergoing elongation thereby to impart biaxial orientation to the finished article, and to maintain the article in contact with the mould for a predetermined heating setting time;

characterised by:

d) spray means (80) including water supply conduits in the gripping means for spraying cooling water into the article after the said heat setting time; and

e) exhaust means (14, 92, 94, 96, 98A) including an exhaust conduit (102) in the second gripping means openable simultaneously with the spray means for exhausting the pressurised gas through one end of the preform, such exhaustion of gas not only creating turbulence by which the cooling water spray is caused to wet substantially the entire inner surface of the central portion but also purging the preform of a substantial quantity of the water.

8. Apparatus as claimed in claim 7, wherein the first gripping means (13) is static and the second gripping means (14) is movable away from the first gripping means longitudinally of the preform during the said elongation of the preform.

**Patentansprüche**

1. Verfahren zum Herstellen aus einem hohlen langgestreckten Vorformling (1), der aus einem kristallisierbaren Polymermaterial besteht, eines langgestreckten thermoplastischen rohrförmigen Gegenstandes, der an beiden Enden offen ist und dessen Abmessungen bis zu einer hohen Temperatur stabil sind, gekennzeichnet durch folgende Verfahrensschritte:

a) Greifen der Endabschnitte des Vorformlings, um zwischen den Endabschnitten einen Mittelabschnitt zu bestimmen, aus welchem der Gegenstand geformt werden soll;

b) Einleiten von Druckgas in den Vorformling, um eine radiale Ausdehnung des Mittelabschnitts gegen ein Formwerkzeug (17) zu bewirken, das auf eine ausreichende Temperatur erhitzt ist, um eine Heißfixierung zu bewirken, wobei der Mittelabschnitt gleichzeitig einer Verlängerung unterzogen wird, wodurch dem fertigen Gegenstand eine biaxiale Orientierung erteilt wird;

c) Halten des Mittelabschnitts in Berührung mit dem Formwerkzeug für eine vorbestimmte Heißfixierzeit, wobei das Druckgas in demselben gehalten wird; dadurch gekennzeichnet, daß sodann erfolgt

d) ein schnelles Abkühlen des Mittelabschnitts durch gleichzeitiges Einsprühen von Kühlwasser in denselben und Ausströmen des Druckgases durch ein Ende des Vorformlings, wobei das Ausströmen des Gases nicht nur Turbulenz erzeugt, durch welche ein Sprühen des Kühlwassers bewirkt wird, um im wesentlichen die ganze Innenfläche des Mittelabschnitts zu benetzen, sondern auch der Vorformling von einer wesentlichen Menge des Kühlwassers befreit wird.

2. Verfahren nach Anspruch 1 oder 2 für einen Vorformling aus Polyethylenterephthalat (PET), wobei das Formwerkzeug (17) auf eine Temperatur im Bereich von 120°C bis 240°C zum Heißfixieren erhitzt wird.

3. Verfahren nach Anspruch 1 oder 2, bei welchem ein erster Teil des Gasausströmens durch eine Strömungsdrossel (98A) durchgeführt wird.

4. Verfahren nach einem der vorangehenden Ansprüche für einen Vorformling aus PET, bei welchem der Gasdruck am Beginn des Schrittes (d) 10 bar übersteigt.

5. Verfahren nach Anspruch 4, bei welchem der Gasdruck am Beginn des Schrittes (d) innerhalb des Bereichs von 10 bis 14 bar liegt.

6. Verfahren nach einem der vorangehenden Ansprüche, bei welchem vor dem Schritt (a) der Vorformling auf eine Temperatur erhitzt wird, die über der Glasübergangstemperatur des Polymermaterials liegt, während ein Temperaturgradient ohne Diskontinuität längs des Mittelabschnitts erzeugt wird.

7. Vorrichtung zum Herstellen aus einem hohlen Vorformling, der aus einem kristallisierbaren Polymermaterial besteht, eines langgestreckten thermoplastischen rohrförmigen Gegenstandes, der an beiden Enden offen ist und dessen Abmessungen bis zu einer hohen Temperatur stabil sind, wobei die Vorrichtung aufweist:

a) erste und zweite, im Abstand voneinander angeordnete Greifeinrichtungen (13,14) zum Greifen der jeweiligen Endabschnitte des Vorformlings, um einen Mittelabschnitt (98) des Vorformlings zu bestimmen, aus welchem der Gegenstand geformt werden soll;

b) ein erhitztes langgestrecktes Formwerkzeug (17), welches den Mittelabschnitt umfaßt, wenn der Vorformling von den Greifeinrichtungen gehalten ist;

c) Einrichtungen einschließlich einer Leitung in der ersten Greifeinrichtung (82,83,19,13) zum Einleiten von Druckgas in den Vorformling, um eine radiale Ausdehnung desselben gegen das Formwerkzeug zu bewirken, wobei der Vorformling gleichzeitig einer Verlängerung unterzogen wird, um dadurch eine biaxiale Orientierung dem fertigen Gegenstand zu erteilen, und um den Gegenstand in Berührung mit dem Formwerkzeug für eine vorbestimmte Heißfixierzeit zu halten;

gekennzeichnet durch:

d) Sprüheinrichtungen (80) einschließlich Wasserzuleitungen in den Greifeinrichtungen zum Sprühen von Kühlwasser in den Gegenstand nach der Heißfixierzeit; und

e) Ausströmeinrichtungen (14,92,94,96,98A) einschließlich einer Ausströmleitung (102) in der zweiten Greifeinrichtung, die gleichzeitig mit der Sprüheinrichtung geöffnet werden kann, um das Druckgas durch ein Ende des Vorformlings ausströmen zu lassen, wobei dieses Ausströmen von Gas nicht nur Turbulenz erzeugt, durch die ein Kühlwassersprühen bewirkt wird, um im wesentlichen die ganze Innenfläche des Mittelabschnitts zu benetzen, sondern auch der Vorformling von einer wesentlichen Menge des Wassers befreit wird.

8. Vorrichtung nach Anspruch 7, bei welcher die erste Greifeinrichtung (13) statisch ist und die zweite Greifeinrichtung (14) von der ersten Greifeinrichtung in Längsrichtung des Vorformlings während der Längsdehnung des Vorformlings weg verschiebbar ist.

**Revendications**

1. Procédé pour fabriquer à partir d'une préforme allongée creuse (1) d'un matériau polymère cristallisable un article tubulaire thermoplastique allongé qui est ouvert aux deux extrémités et qui a une stabilité dimensionnelle jusqu'à une température élevée, le procédé comprenant les phases consistant à :

    a) saisir les portions d'extrémité de la préforme pour définir entre les portions d'extrémité une portion centrale à partir de laquelle l'article doit être formé;

    b) introduire un gaz sous pression dans la préforme pour amener la portion centrale à se dilater radialement contre un moule (17) chauffé à une température suffisante pour entraîner une thermofixation, la portion centrale subissant simultanément un allongement de manière à donner une orientation bi-axiale à l'article fini;

    c) maintenir la portion centrale en contact avec le moule pendant une durée prédéterminée de thermofixation avec ledit gaz sous pression gardé en son sein; caractérisé par la phase consistant a,

    d) refroidir rapidement la portion centrale en pulvérisant simultanément de l'eau de refroidissement dans la portion et en évacuant ledit gaz sous pression par une extrémité de la préforme, l'évacuation du gaz créant non seulement une turbulence par laquelle la pulvérisation d'eau de refroidissement est amenée à mouiller sensiblement toute la surface interne de la portion centrale mais purgeant également la préforme d'une quantité substantielle d'eau de refroidissement.

2. Procédé selon la revendication 1 ou 2 pour une préforme de PET, dans lequel le moule (17) est chauffé à une température comprise entre 120°C et 240°C pour une thermofixation.

3. Procédé selon la revendication 1 ou 2 dans lequel une première partie de l'évacuation de gaz est effectuée via un dispositif d'étranglement (98A).

4. Procédé selon l'une quelconque des revendications précédentes pour une préforme de PET, dans lequel la pression de gaz au début de la phase (d) est supérieure à 10 bars.

5. Procédé selon la revendication 4, dans lequel la pression de gaz au début de la phase (d) est comprise entre 10 et 14 bars.

6. Procédé selon l'une quelconque des revendications précédentes comprenant, avant la phase (a), le chauffage de ladite préforme jusqu'à une température supérieure à la température de transition vitreuse du matériau polymère tout en créant un gradient de température ininterrompu le long de la portion centrale.

7. Appareil pour fabriquer à partir d'une préforme creuse d'un matériau polymère cristallisable un article tubulaire thermoplastique allongé qui est ouvert aux deux extrémités et qui a une stabilité dimensionnelle jusqu'à une température élevée, l'appareil comprenant :

    a) un premier et un second moyens de préhension (13, 14) pour saisir les portions d'extrémité respectives de la préforme de manière à définir une portion centrale (98) de la préforme à partir de laquelle l'article doit être formé;

    b) un moule allongé chauffé (17) pour entourer la portion centrale lorsque la préforme est maintenue par les moyens de préhension;

c) un moyen comprenant un conduit dans le premier moyen de préhension (82, 83, 19, 13) pour introduire le gaz sous pression dans la préforme pour l'amener à se dilater radialement contre le moule, la préforme subissant simultanément un allongement de manière à donner une orientation bi-axiale à l'article fini, et maintenir l'article en contact avec le moule pendant une durée prédéterminée de thermofixation; caractérisé par :

d) un moyen de pulvérisation (80) comprenant des conduits de distribution d'eau dans les moyens de préhension pour pulvériser de l'eau de refroidissement dans l'article après ladite durée de thermofixation; et

e) des moyens d'évacuation (14, 92, 94, 96, 98A) comprenant un conduit d'évacuation (102) dans le second moyen de préhension pouvant être ouvert en même temps que le moyen de pulvérisation pour évacuer le gaz sous pression par une extrémité de la préforme, ladite évacuation du gaz créant non seulement une turbulence par laquelle la pulvérisation d'eau de refroidissement est amenée à mouiller sensiblement toute la surface interne de la portion centrale mais purgeant également la préforme d'une quantité substantielle d'eau.

8.  Appareil selon la revendication 7, dans lequel le premier moyen de préhension (13) est statique et le second moyen de préhension (14) peut être éloigné du premier moyen de préhension dans le sens de la longueur de la préforme durant ledit allongement de la préforme.

FIG.1

10 8 6 3 5 7 2 11

12 14 24 15
80 19 13 17 A 14a 16 20 22 18 4

EP 0 434 276 B1

FIG.2

## FIG. 3

AIR →

AIR →

80    19    1    94    13    80    94

## FIG. 4g

AIR →
WATER →

A →

AIR
WATER

EP 0 434 276 B1

FIG.4a

$L_0$

17

1

14

14a

13

98

FIG.4b

1

98

14

13

FIG.4c

PREBLOW
AIR

100

98

1

EP 0 434 276 B1

FIG. 4d

AIR VALVE OPEN

100 98 1

FIG. 4e

VALVE CLOSED

98 100 1

FIG. 4f

MAIN BLOW PRESSURE

EP 0 434 276 B1

TEMPERATURE GRADIENT ALONG THE TUBE

FIG. 5a

EP 0 434 276 B1

TEMPERATURE GRADIENT ALONG THE TUBE

EP 0 434 276 B1

HEIGHT REDUCTION (%)      □  5/5 HSET/FLUSH      FIG. 6

HEATSET TEMPERATURE (deg C)

EP 0 434 276 B1

DIAMETER REDUCTION (%)   □   5/5 HSET/FLUSH        *FIG. 7*

HEATSET TEMPERATURE (deg C)

EP 0 434 276 B1

FIG. 8

VOLUME SHRINKAGE (%)    □  5/5 HSET/FLUSH

HEATSET TEMPERATURE (deg C)

EP 0 434 276 B1

# FIG. 9

(a) PRESSURE / H/SET HOLD TIME / WATER SPRAY / PREBLOW/STRETCHING

(b) MAINBLOW

(c) RESTRICTED EXHAUST

(d) MAIN EXHAUST

(e) WATER SPRAY

FIG. 10

% CRYSTALLINITY

POSITION

NON - HEATSET        HEATSET

EP 0 434 276 B1